Europäisches Patentamt

European Patent Office

Office européen des brevets

(19)

(11) Numéro de publication: **0 226 499
B1**

(12) **FASCICULE DE BREVET EUROPEEN**

(45) Date de publication du fascicule du brevet:
**08.11.89**

(51) Int. Cl.⁴: **F02K 9/36, F02K 9/34**

(21) Numéro de dépôt: **86402573.9**

(22) Date de dépôt: **20.11.86**

(54) Aménagement interne anti-clappement pour propulseur à poudre et son procédé de fabrication.

(30) Priorité: **05.12.85 FR 8518021**

(43) Date de publication de la demande:
**24.06.87 Bulletin 87/26**

(45) Mention de la délivrance du brevet:
**08.11.89 Bulletin 89/45**

(84) Etats contractants désignés:
**DE GB IT**

(56) Documents cités:
**FR-A- 2 248 416
FR-A- 2 466 627
GB-A- 729 525
US-A- 3 446 018
US-A- 3 616 646
US-A- 3 786 633
US-A- 4 458 483**

(73) Titulaire: **SOCIETE EUROPEENNE DE PROPULSION,
24 rue Salomon de Rothschild, F-92150 Suresnes(FR)**

(72) Inventeur: **Beboux, Jean, 8, rue des Rosiers Appt 35,
F-33200 Bordeaux(FR)**

(74) Mandataire: **Joly, Jean-Jacques et al, CABINET BEAU
DE LOMENIE 55, rue d'Amsterdam, F-75008 Paris(FR)**

## Description

La présente invention concerne un aménagement interne anti-clappement pour propulseur à poudre du type comprenant un bloc de poudre logé dans une enveloppe avec interposition d'une protection thermique et délimitant une chambre de combustion, un décollement formé entre le bloc de poudre et le revêtement de protection thermique de la structure de fond du propulseur au moyen d'une peau décollée dudit revêtement et adhérant au bloc de poudre, et des moyens ménageant un passage pour les gaz de la chambre de combustion dans le décollement.

Un propulseur du type défini ci-dessus est décrit dans le brevet française No 2 466 627. Les blocs de poudre pour propulseurs sont sollicités par des efforts et déformations mécaniques, notamment des allongements, lors des phases de fabrication, de stockage et de fonctionnement. Aussi, il est bien connu de ménager des zones de séparation ou décollements entre le bloc de poudre et la structure voisine du propulseur, notamment dans les zones de fond. Le volume occupé par les décollements est variable en fonction de la position du propulseur, de conditions d'état et des efforts agissant sur le propulseur. Il peut même se produire qu'un ou plusieurs décollements soient fermés par suite par exemple d'un stockage prolongé, d'un champ d'accélérations, d'une pression interne s'exerçant sur le fond, d'une adhérence imprévue des faces en regard du décollement,... Dans un tel cas, une ouverture brutale du décollement après l'allumage du propulseur peut provoquer une variation brusque de l'effort exercé sur le bloc de poudre tout le long du décollement. Le choc ainsi produit, ou "clappement", peut avoir une intensité élevée et mettre en danger la tenue des équipements véhiculés par le propulseur. Pour prévenir le phénomène de clappement, il a été proposé dans le brevet français No 2 466 627 précité de former un passage faisant communiquer la chambre de combustion avec le décollement au moyen d'éléments liés à la structure de fond du propulseur et au bloc de poudre, ces éléments étant agencés pour maintenir sensiblement constante la section du passage lors de mouvements de fermeture ou d'ouverture du décollement.

Toutefois, les solutions décrites dans le brevet français No 2 466 627 résultent en une structure du propulseur relativement complexe et la présente invention a pour but de fournir un moyen de favoriser le passage des gaz de la chambre de combustion vers le décollement, sans complication de la structure du propulseur et de sa fabrication.

Ce but est atteint au moyen d'un aménagement de propulseur selon la revendication 1. L'invention a également pour objet un procédé de fabrication d'un tel aménagement de propulseur, selon la revendication 4.

D'autres particularités et avantages de l'invention ressortiront à la lecture de la description faite ci-après à titre indicatif mais non limitatif en référence aux dessins annexés sur lesquels :

- la figure 1 est une vue générale d'un propulseur présentant un aménagement interne anti-clappement conforme à l'invention,
- la figure 2 est une vue de détail d'une partie de fond du propulseur de la figure 1,
- la figure 3 est une vue partielle montrant l'agencement des picots sur la peau décollée de la figure 2,
- les figures 4a à 4c illustrent des phases d'un procédé de fabrication de la peau décollée à picots de la figure 2, et
- les figures 5a - 5b, 6a - 6b et 7 illustrent d'autres modes de fabrication de picots pour une structure de propulseur selon l'invention.

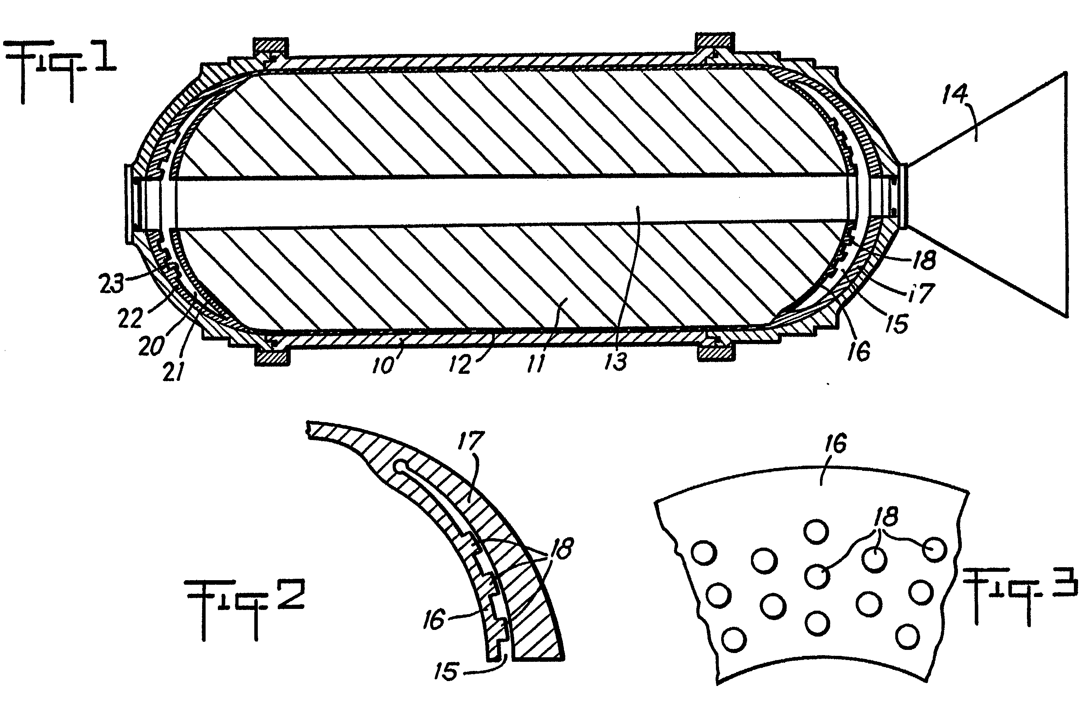

La figure 1 montre schématiquement un propulseur à poudre comprenant une enveloppe 10 et un bloc de poudre 11 logé dans l'enveloppe avec interposition d'une protection thermique 12. Un canal central formant chambre de combustion 13 est ménagé dans le bloc de poudre. Aux extrémités du propulseur, des décollements 15, 20 sont formés par des peaux 16, 21 décollées des revêtements 17, 22 de protection thermique des structures de fond du propulseur. Comme le montre la figure 1, les revêtements 17, 22 présentent une épaisseur supérieure à celle de la protection thermique dans la zone centrale du propulseur, notamment du côté arrière où est fixée une tuyère 14. En effet, au cours de la consommation du bloc de poudre, ce sont les zones de fond qui sont les premières en contact avec les gaz de combustion.

Conformément à l'invention, des protubérances ou picots sont formés dans les décollements 15, 20 pour éviter la fermeture de ceux-ci et favoriser le passage des gaz de la chambre de combustion vers les décollements après allumage.

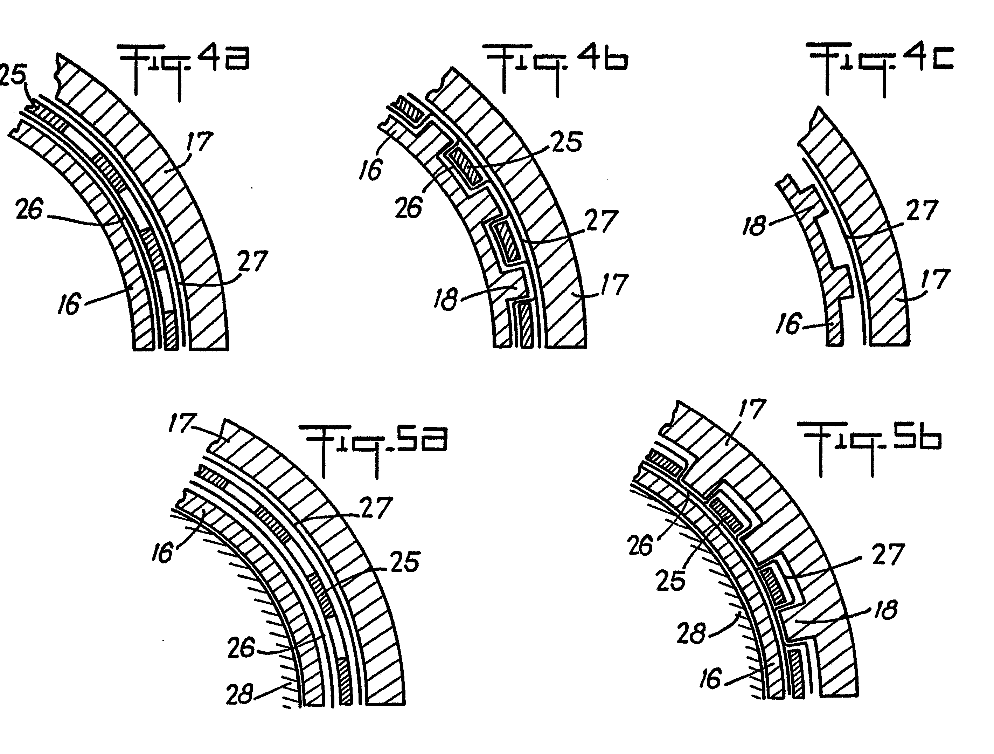

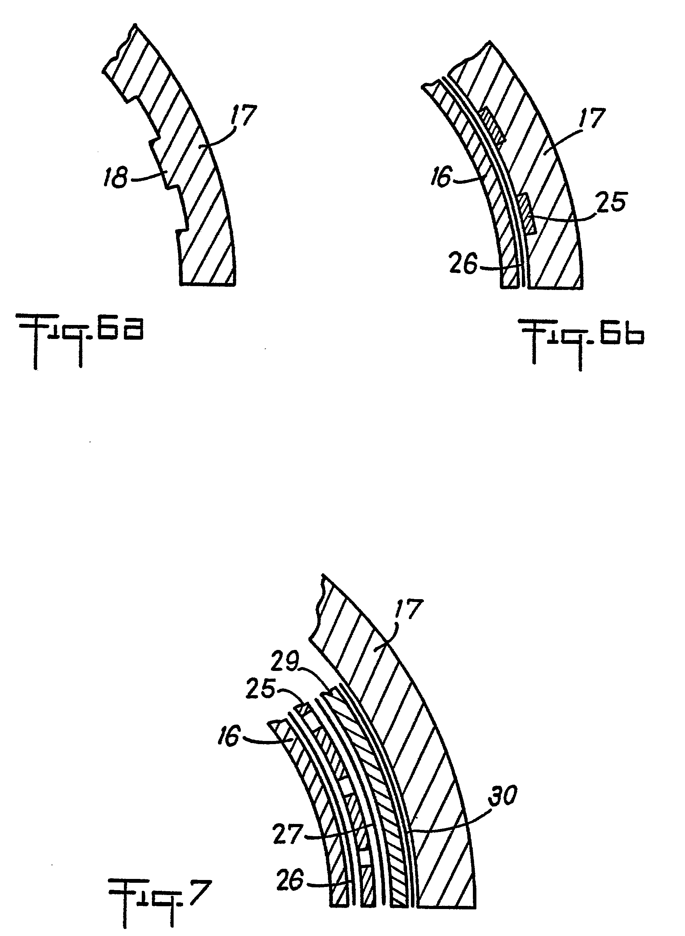

Comme le montrent la figure 1 et, de façon plus détaillée, les figures 2 et 3, les picots 18 sont, dans l'exemple illustré, formés d'une seule pièce avec la peau décollée 16, suivant une disposition en quinconce. Bien entendu, les picots peuvent également être formés sur le revêtement de protection thermique de la structure de fond, comme les picots 23 de la figure 1. Les picots ont par exemple une forme de pastilles circulaires.

Les figures 4a à 4c illustrent un mode de fabrication de la peau décollée 16 à picots 18 montrée sur la figure 2. La peau décollée 16 en caoutchouc non vulcanisé est drapée sur le revêtement de protection thermique 17 préalablement vulcanisé, avec interposition d'un masque à picots 25 (fig 4a). Ce dernier est constitué par une feuille perforée en caoutchouc vulcanisé dont l'épaisseur est égale à celle des picots à réaliser et dont les perforations sont disposées selon les emplacements désirés pour les picots. La feuille 25 peut être réalisée par drapage puis vulcanisation en utilisant comme moule le revêtement de protection thermique 17 ; elle est ensuite perforée. Des feuilles 26, 27 de polytétrafluoroéthylène (PTFE) sont disposées de chaque côté du masque à picots 25 pour éviter le collage du caoutchouc de la peau décollée sur le masque ou, à travers celui-ci, sur le revêtement 17 lors de la vulcanisation. L'ensemble ainsi constitué est soumis à une vulcanisation. Sous l'effet de la pression, le caoutchouc flue dans les trous du masque 25 en déformant le film 26 de PTFE. Après vulcanisation (fig 4b), la face interne de la peau décollée 16 offre un profil lisse et continu tandis que la face externe présente des picots 18 aux emplacements des perforations du masque 25. Ce dernier est ensuite retiré et une seule 27 des feuilles 26, 27 est laissée en place pour empêcher tout collage éventuel des picots 18 sur la protection thermique 17 (fig.4c).

En variante, les picots 18 peuvent être formés sur la protection thermique comme illustré par les figures 5a et 5b. La peau décollée 16 est d'abord réalisée sur un moule mâle 28. La protection thermique 17 non vulcanisée est ensuite drapée sur ce moule équipé de la peau décollée vulcanisée 16 avec interposition du masque à picots 25 et des feuilles de PTFE 26, 27 de chaque côté du masque (fig 5a). La protection thermique est vulcanisée ce qui provoque un fluage du caoutchouc dans les trous de masque 25 avec déformation de la feuille 27 (fig. 5b). Après vulcanisation, le masque à picots 25 est retiré ainsi que l'une 27 des feuilles 26, 27, laissant le revêtement 17 muni de picots 18 aux emplacements occupés par les perforations du masque 25.

Selon encore une autre variante le revêtement de protection thermique 17 est formé directement avec des picots 18 dans un moule ayant un profil correspondant (fig 6a). Ensuite, la peau décollée 16 est drapée sur la protection thermique 17, après mise en place d'un masque à picots 25, pour combler les espaces entre les picots 18 afin d'éviter qu'ils s'impriment dans la peau décollée, et après interposition d'une feuille 26 de PTFE pour éviter le collage de la peau 16 sur les picots 18 (fig 6b). La peau décollée est vulcanisée puis le masque est retiré. Bien entendu, on pourrait de façon similaire former directement la peau décollée avec des picots dans un moule ayant un profil correspondant, puis draper le revêtement de protection thermique après interposition du masque à picots et d'une feuille de PTFE, et vulcaniser le revêtement.

Enfin, selon encore une autre variante (fig 7), l'ensemble peau décollée et revêtement de protection thermique peut être formé en une seule opération. La protection thermique 17 est drapée et est recouverte d'une feuille de PTFE 30, d'une peau de protection vulcanisée 29, éventuellement d'une feuille de PTFE 27, de masque à picots 25, et d'une deuxième feuille de PTFE 26 sur laquelle est drapée la peau décollée 16. La protection thermique et la peau décollée sont vulcanisées. Le caoutchouc de la peau décollée flue dans les perforations du masque pour former les picots 18 tandis que le fluage du caoutchouc de la protection thermique est empêché par la peau de protection 29. Bien entendu, les picots pourraient de la même façon être formés sur le revêtement de protection thermique en inversant les positions du masque 25 et de la peau de protection 29.

## Revendications

1. Aménagement interne anti-clappement pour propulseur à poudre comprenant un bloc de poudre (11) logé dans une enveloppe (10) avec interposition d'une protection thermique (12) et délimitant une chambre de combustion (13), un décollement (15, 20) formé entre le bloc de poudre (11) et le revêtement (17, 22) de protection thermique de la structure de fond du propulseur au moyen d'une peau (16, 21) décollée dudit revêtement et adhérant au bloc de poudre, et des moyens ménageant un passage pour les gaz de la chambre de combustion dans le décollement, caractérisé en ce que l'une au moins des deux parties que constituent la peau décollée (16, 21) et le revêtement (17, 22) de protection thermique de la structure de fond du propulseur présentent des protubérances ou picots (18) pour assurer un écartement minimum de la peau décollée par rapport audit revêtement et faciliter l'accès des gaz dans le décollement (15, 20).

2. Aménagement selon la revendication 1, caractérisé en ce que certains au moins des picots (18) sont formés en une seule pièce avec la peau décollée (16).

3. Aménagement selon la revendication 1, caractérisé en ce que certains au moins des picots (18) sont formés en une seule pièce avec le revêtement (17) de protection thermique de la structure de fond du propulseur.

4. Procédé de fabrication d'un aménagement interne anti-clappement pour propulseur à poudre comprenant: un bloc de poudre (11) logé dans une enveloppe (10) avec interposition d'une protection thermique (12) et délimitant une chambre de combustion (13), le procédé comprenant les étapes consistant à former un décollement (15, 20) entre le bloc de poudre (11) et le revêtement (17, 22) de protection thermique de la structure de fond du propulseur au moyen d'une peau (16, 21) décollée dudit revêtement et adhérant au bloc de poudre, et à prévoir des moyens ménageant un passage pour les gaz de la chambre de combustion dans le décollement, caractérisé en ce que des protubérances ou picots (18) sont formés par moulage en une seule pièce avec l'une au moins des deux parties que constituent la peau décollée (16, 21) et le revêtement (17, 22) de protection thermique de la structure de fond du propulseur, de manière à assurer un écartement minimum de la peau décollée par rapport audit revêtement et à faciliter l'accès aux gaz dans le décollement.

5. Procédé selon la revendication 4, caractérisé en ce qu'il comprend les étapes qui consistent à former le revêtement de protection thermique (17, fig. 4a–4c), placer sur le revêtement un masque à picots (25) dont les perforations correspondent aux picots à former sur la peau décollée, draper le matériau non vulcanisé de la peau décollée par dessus le masque à picots, et vulcaniser la peau décollée (16) en provoquant la formation des picots (18) par fluage du matériau dans les perforations du masque à picots.

6. Procédé selon la revendication 4, caractérisé en ce qu'il comprend les étapes qui consistent à former la peau décollée (16, fig. 5a–5b), placer sur la peau décollée un masque à picots (25) dont les perforations correspondent aux picots à former sur le revêtement de protection thermique, draper le matériau non vulcanisé du revêtement de protection thermique par dessus le masque à picots, et vulcaniser le revêtement de protection thermique (17) en provoquant la formation des picots (18) par fluage du matériau dans les perforations du masque à picots.

7. Procédé selon la revendication 4, caractérisé en ce qu'il comprend les étapes qui consistent à former une première (17, fig. 6a–6b) des deux parties constituées par la peau décollée et le revêtement de protection thermique avec des picots (18) par moulage dans un moule de profil correspondant, placer sur cette première un masque à picots (25) de manière à combler les espaces entre les picots, draper sur la première partie et le masque à picots le matériau non vulcanisé de la deuxième partie, et vulcaniser ce matériau pour former cette deuxième partie.

8. Procédé selon la revendication 4, caractérisé en ce qu'il comprend les étapes qui consistent à draper le matériau non vulcanisé d'une première (17, fig. 7) des deux parties constituées par la peau décollée et le revêtement de protection thermiqe, placer sur cette première partie une peau de protection (29) et un masque à picots (25) dont les perforations correspondent aux picots à former sur la deuxième partie, draper le matériau non vulcanisé de la deuxième partie (16) par dessus le masque à picots, et vulcaniser simultanément la première et la deuxième partie en provoquant la formation des picots par fluage du matériau de la deuxième partie dans les perforations du masque à picots.

## Claims

1. An internal anti-popping assembly for a solid propellant rocket motor comprising a propellant grain block (11) housed in a casing (10) with a heat-protection layer (12) interposed between the propellant grain and the casing, and defining a combustion chamber (13), a separation zone (15, 20) formed between the propellant grain block (11) and heat-protection layer (17, 22) of a bottom structure of the rocket, by a skin (16, 21) detached from said heat-protection layer and adhering to the solid grain block, and means providing a passage for gases from the combustion chamber into the separation zone, characterized in that at least one of the two parts constituted by the detached skin (16, 21) and the heat-protection layer (17, 22) of the rocket motor bottom structure is provided with projections or teeth (18) to ensure a minimum spacing of the detached skin with respect to said layer and to give easy access to the gases into the separation zone (15, 20).

2. An assembly according to claim 1, characterized in that at least some of the teeth (18) are formed in one piece with the detached skin (16).

3. An assembly according to claim 1, characterized in that at least some of the teeth (18) are formed in one piece with the heat-protection layer (17) of the rocket motor bottom structure.

4. A process for producing an internal anti-popping assembly for a solid-propellant rocket comprising: a propellant grain block (11) housed in a casing (10) with a heat-protection layer (12) interposed between the propellant grain and the casing, and delimiting a combustion chamber (13), said process comprising the steps of forming a separation zone (15, 20) between said grain block, (11) and said heat/protection layer (17, 22) of a bottom structure of the rocket by means of a skin (16, 21) that is detached from said heat/protection layer and adhered to said grain block, and providing means forming a passage for the gases from the combustion chamber to said separation zone, characterized in that projections or teeth (18) are molded in one piece with one at least of the two parts constituted by the detached skin (16, 21) and the heat-protection layer (17, 22) of the rocket motor bottom structure to ensure a minimum spacing of the detached skin with respect to said layer and facilitate gas access into the separation zone.

5. A process according to claim 4, characterized in that said process comprises the steps of forming the heat-protection layer (17, fig. 4a–4c), placing on same a teeth mask (25) of which the perforations correspond to the teeth to be formed on the detached skin, draping the uncured material of the detached skin over the teeth mask, and curing said detached skin (16) in order to cause the formation of teeth (18) by creeping of the material into the perforations of the teeth mask.

6. A process according to claim 4, characterized in that said process comprises the steps of forming the detached skin (16, Fig. 5a–5b) placing a teeth mask over said detached skin, in which teeth mask (25) the perforations correspond to the teeth to be formed on the heat-protection layer, draping the uncured material of the heat-protection layer over the teeth mask, and curing said heat-protection layer (17) in order to cause the formation of teeth (18) by creeping of the material into the perforations of the teeth mask.

7. A process according to claim 4, characterized in that said process comprises the steps of forming a first (17, Fig. 6a–6b) of the two parts constituted by the detached skin and the heat-protection layer, with teeth (18), by molding in a mold of corresponding profile, placing on said first part a teeth mask (25) so as to fill the spaces between the teeth, draping over the first part and the teeth mask the uncured material of the second part, and curing said material in order to form said second part.

8. A process according to claim 4, characterized in that said process comprises the steps of draping the uncured material of a first (17, Fig. 7) of the two parts constituted by the detached skin and the heat-protection layer, placing over said first part a protection skin (29) and a teeth mask (25) of which the perforations correspond to the teeth to be formed on the second part, draping the uncured material of the second part (16) over the teeth mask and simultaneously curing the first and second parts in order to cause the formation of teeth by creeping of the material of the second part into the perforations of the teeth mask.

## Patentansprüche

1. Innere Anti-Kollabiervorrichtung für Pulvertreibladung mit einem Pulverblock (11), der in einem Mantel (10) unter Zwischenfügung eines Wärmeschutzes (12) aufgenommen ist und eine Brennkammer (13) begrenzt, wobei ein Spaltraum (15, 20) zwischen dem Pulverblock (11) und dem Überzug (17, 22) zum Wärmeschutz des Bodenaufbaus der Treibladung mittels einer von diesem Überzug abgelösten und am Pulverblock haftenden Haut (16, 21) gebildet ist, und Mitteln, die einen Durchlaß für die Gase aus der Brennkammer in den Spaltraum schaffen, dadurch gekennzeichnet, daß wenigstens einer der beiden Teile, die die abgelöste Haut (16, 21) und den Überzug (17, 22) zum Wärmeschutz des Bodenaufbaus der Treibladung bilden, Vorsprünge oder Zähne (18) aufweisen, um einen Mindestabstand der abgelösten Haut gegenüber diesem Überzug zu sichern und den Einlaß der Gase in den Spaltraum (15, 20) zu erleichtern.

2. Vorrichtung nach dem Anspruch 1, dadurch gekennzeichnet, daß wenigstens einige der Zähne (18) einstückig mit der abgelösten Haut (16) gebildet sind.

3. Vorrichtung nach dem Anspruch 1, dadurch gekennzeichnet, daß wenigstens einige der Zähne (18) einstückig mit dem Überzug (17) zum Wärmeschutz des Bodenaufbaus der Treibladung gebildet sind.

4. Verfahren zur Herstellung einer inneren Anti-Kollabiervorrichtung für Pulvertreibladung mit einem Pulverblock (11), der in einem Mantel (10) unter Zwischenfügung eines Wärmeschutzes (12) aufgenommen ist und eine Brennkammer (13) begrenzt, welches Verfahren die Stufen aufweist, die aus der Bildung eines Spaltraums (15, 20) zwischen dem Pulverblock (11) und dem Überzug (17, 22) zum Wärmeschutz des Bodenaufbaus der Treibladung mittels einer von diesem Überzug abgelösten und am Pulverblock haftenden Haut (16, 21) und aus dem Vorsehen von Mitteln bestehen, die einen Durchlaß für die Gase aus der Brennkammer in den Spaltraum schaffen, dadurch gekennzeichnet, daß Vorsprünge oder Zähne (18) durch Formen in einem Stück mit wenigstens einem der beiden Teile, die die abgelöste Haut (16, 21) und den Überzug (17, 22) zum Wärmeschutz des Bodenaufbaus der Treibladung bilden, derart gebildet werden, um einen Mindestabstand der abgelösten Haut gegenüber diesem Überzug zu sichern und den Einlaß der Gase in den Spaltraum zu erleichtern.

5. Verfahren nach dem Anspruch 4, dadurch gekennzeichnet, daß es die Stufen aufweist, die aus dem Bilden des Wärmeschutzüberzugs (17, Fig. 4a–4c), dem Anordnen einer Zähnemaske (25) auf dem Überzug, deren Löcher den auf der abgelösten Haut zu bildenden Zähnen entsprechen, dem Aufbringen des nichtvulkanisierten Materials der abgelösten Haut oberseitig der Zähnemaske und dem Vulkanisieren der abgelösten Haut (16) unter Bewirkung der Bildung der Zähne (18) durch Fließen des Materials in die Löcher der Zähnemaske bestehen.

6. Verfahren nach dem Anspruch 4, dadurch gekennzeichnet, daß es die Stufen aufweist, die aus dem Bilden der abgelösten Haut (16, Fig. 5a–5b), dem Anordnen einer Zähnemaske (25) auf der abgelösten Haut, deren Löcher den auf dem Wärmeschutzüberzug zu bildenden Zähnen entsprechen, dem Aufbringen des nichtvulkanisierten Materials des Wärmeschutzüberzugs oberseitig der Zähnemaske und dem Vulkanisieren des Wärmeschutzüberzugs (17) unter Bewirkung der Bildung der Zähne (18) durch Fließen des Materials in die Löcher der Zähnemaske bestehen.

7. Verfahren nach dem Anspruch 4, dadurch gekennzeichnet, daß es die Stufen aufweist, die aus dem Bilden eines ersten (17, Fig. 6a–6b) der beiden Teile, die aus der abgelösten Haut und dem Wärmeschutzüberzug bestehen, mit Zähnen (18) durch Formen in einer Form entsprechenden Profils, dem Anordnen einer Zähnemaske (25) auf diesem ersten derart, um die Räume zwischen den Zähnen auszufüllen, dem Aufbringen des nichtvulkanisierten Materials des zweiten Teils auf den ersten Teil und die Zähnemaske und dem Vulkanisieren dieses Materials zur Bildung dieses zweiten Teils bestehen.

8. Verfahren nach dem Anspruch 4, dadurch gekennzeichnet, daß es die Stufen aufweist, die aus dem Anbringen des nichtvulkanisierten Materials eines ersten (17, Fig. 7) der beiden Teile, die aus der abgelösten Haut und dem Wärmeschutzüberzug bestehen, dem Anordnen einer Schutzhaut (29) auf einer Zähnemaske (25) auf diesem ersten Teil, deren Löcher den auf dem zweiten Teil zu bildenden Zähnen entsprechen, dem Aufbringen des nichtvulkanisierten Materials des zweiten Teils (16) oberseitig der Zähnemaske und dem gleichzeitigen Vulkanisieren des ersten und des zweiten Teils unter Bewirkung der Bildung der Zähne durch Fließen des Materials des zweiten Teils in die Löcher der Zähnemaske bestehen.

Fig. 1

14

18
17
15
16

23
22
20
21

10 12 11 13

EP 0 226 499 B1

17
18
16
15

Fig. 2

16
18

Fig. 3

Fig.4c

Fig.4b

Fig.4a

Fig.5b

Fig.5a

Fig.6a

Fig.6b

Fig.7